# EUROPÄISCHE PATENTSCHRIFT

(11) **EP 0 905 393 B1**
(45) Veröffentlichungstag und Bekanntmachung des Hinweises auf die Patenterteilung: **04.02.2004**
(21) Anmeldenummer: 98111337.6
(22) Anmeldetag: 19.06.1998
(51) Int. Cl.: F16B 43/00, F16B 39/24

(54) **Federring**
Elastic ring
Anneau à ressort

(30) Priorität: 26.09.1997 DE 19742639
(43) Veröffentlichungstag der Anmeldung: 31.03.1999
(73) Patentinhaber: Growermetal S.p.A., 22050 Calco (LC) (IT)
(72) Erfinder: Brinkmann, Günter, 58091 Hagen (DE)
(74) Vertreter: Kador & Partner

(56) Entgegenhaltungen:
- DE-C- 459 063
- DE-C- 894 022
- US-A- 3 097 679

## Beschreibung

Die vorliegende Erfindung betrifft einen Federring. (DE 459 063). Beim Einsatz von Federringen, insbesondere als Schraubensicherung, werden besondere Anforderungen an die Festigkeit sowie den durch die Schraubensicherung ermöglichten Kraftschluß zwischen Schraube und Werkstück gestellt.

Aufgabe der vorliegenden Erfindung ist es, einen Federring zur Verfügung zu stellen, der mit geringem Aufwand und niedrigen Kosten hergestellt werden kann. Zugleich soll sich der Federring durch hohe Dauerhaftigkeit auch unter hohen Belastungen und durch günstige Eigenschaften für den Einsatz als Schraubensicherung auszeichnen.

Der Erfindung liegt die Erkenntnis zugrunde, daß diese Aufgabe durch einen Federring gelöst werden kann, der nur an ausgewählten Stellen an der Ober- und/oder Unterseite Vertiefungen aufweist, und die Merkmale des Anspruchs 1 aufweist.

Durch einen solchen Ring können die Vertiefungen auf die Bereiche beschränkt werden, in denen diese für den erforderlichen Kraft- und/oder Formschluß zwischen Ring und Schraube bzw. Werkstück notwendig sind. Der Arbeitsaufwand zum Einbringen der Vertiefungen ist daher minimiert. Zudem können durch Einbringen der Vertiefungen in Teilbereichen diejenigen Bereiche des Rings ausgespart werden, die besonders hohen Belastungen im eingebauten Zustand ausgesetzt sind. Beim Einbringen von Vertiefungen wird in der Regel das Material durch Verringerung der Materialstärke an dieser Stelle geschwächt. Zusätzlich wird der Faserverlauf an der Oberfläche unterbrochen. Wird so eine mit Vertiefungen versehene Oberfläche unter Zugspannung z.B. beim Biegen gesetzt, kann es zum Bruch kommen.

Im Gegensatz zu herkömmlichen Ringen, die Profilierungen über die gesamte Ober- und Unterseite des Rings aufweisen, findet bei dem erfindungsgemäßen Ring vorzugsweise an kritischen Stellen keine Schwächung des Materials durch Verringerung der Materialstärke und Beeinflussung des Faserverlaufs statt. Als kritische Stellen werden insbesondere diejenigen bezeichnet, an denen im eingebauten Zustand hohe Spannungen herrschen.

Bei herkömmlichen Federringen besteht zudem die Gefahr, daß durch ungleichmäßige Härtung zu hohe Festigkeiten in Teilbereichen des Rings auftreten, die bei zusätzlich großen Tiefen der Profilierung eine Bruchgefahr darstellen. Diese Festigkeitsunterschiede, die im Bereich von 200 N/mm² liegen können, können auch durch Anlassen nicht behoben werden. Bei dem erfindungsgemäßen Federring hingegen sind die kritischen Stellen vorzugsweise nicht mit Vertiefungen versehen, so daß selbst bei eventuellen Festigkeitsunterschieden im Material an diesen Stellen ein Bruch nicht zu erwarten ist bzw. ausgeschlossen werden kann.

Schließlich bietet der erfindungsgemäße Federring eine große Flexibilität bei der Art der Herstellung. So können die Vertiefungen entweder an dem Halbzeug vor dem Formen des Rings oder nachdem der Ring in seiner Endform vorliegt vor dem Härten eingebracht werden.

Gemäß der Erfindung liegen die Vertiefungen in den Auflagebereichen des Rings vor. Durch diese Platzierung der Teilbereiche, in denen Vertiefungen eingebracht sind, wird eine Schwächung des Materials auf die Bereiche reduziert, die den Kraft- und/oder Formschluß beeinflussen. Als Auflagebereiche sind die Flächen zu verstehen, an denen der Ring mit der Schraube bzw. dem Werkstück nach dem Anziehen der Schraube in Kontakt ist.

Nach einer weiteren bevorzugten Ausführungsform sind die mit Vertiefungen versehenen Teilbereiche an der Ober- und Unterseite des Rings zueinander versetzt angeordnet.

Diese Ausführungsform weist den Vorteil auf, daß die Stärke des Halbzeugs immer nur von einer Seite durch die Vertiefungen verringert wird und somit unter Bereitstellung einer ausreichenden Griffigkeit des Rings eine maximale Materialstärke mit ungestörtem Faserverlauf vorliegt.

Die Teilbereiche, die mit Vertiefungen versehen sind, können an den Enden der Ober- bzw. Unterseite des Rings angeordnet sein. Diese Stellen haben insbesondere bei einem einfachen Federring, aber auch bei Federringen mit mehreren Windungen, den ersten Kontakt mit dem Werkstück bzw. der Schraube. Löst sich die Schraubenverbindung um einen gewissen Betrag, so stehen diese Stellen meist dennoch mit der Schraube bzw. dem Werkstück in Verbindung. Durch Einbringen der Vertiefungen in eben diesen Bereichen kann somit eine Schraubensicherung bereitgestellt werden, die auch bei leicht gelöster Schraube ein vollständiges Losdrehen verhindert. Zudem sind Ringe, die Teilbereiche mit Vertiefungen an den Enden aufweisen, einfach herzustellen. Werden die Vertiefungen am Halbzeug eingebracht, so können diese z.B. in einem Arbeitsschritt zusammen mit dem Zerteilen eingebracht werden. Bei dem Einbringen der Vertiefungen am fertigen Ring sind die Enden der Ober- bzw. Unterfläche auch bei einem mehrfach gewundenen Ring leicht zugänglich und können so einfach bearbeitet werden.

In einer bevorzugten Ausführungsform weisen die zwischen den mit Vertiefungen versehenen Teilbereiche eine glatte unprofilierte Oberfläche auf.

Ringe, die diese Beschaffenheit aufweisen, können aus glattem Halbzeug erzeugt werden, was eine kostengünstige Herstellung ermöglicht. Zusätzlich ist der Ring in den von Vertiefungen ausgesparten Bereichen in seiner Materialstärke nicht geschwächt und Brüche in diesen Bereichen können daher wirksam vermieden werden.

Die Vertiefungen sind in einem Abstand von den Kanten bzw. Enden des Rings eingebracht. Insbesondere in den Fällen, in denen die Vertiefungen vor dem Härten eingebracht werden, würden bei Vertiefungen, die bis an die Kante bzw. das Ende des Federrings reichen, Schwachstellen ausgebildet. Das zwischen den Vertiefungen stehengebliebene Material würde an den Kanten bzw. Enden feine Ecken bilden, die leicht abbrechen und dadurch die Stabilität des gesamten Ringes schwächen würden.

Durch Einhaltung eines gewissen Abstandes zu den Kanten bzw. Enden kann diese Gefahr vermieden werden.

Die Vertiefungen können Prägungen, Walzeindrücke oder Fräsmuster sein.

Das Einwalzen der Vertiefungen kann am Halbzeug vorgenommen werden und kann somit in den Arbeitsgang der Herstellung des Halbzeugs einbezogen werden. Hierdurch können die Arbeitszeit und damit die Kosten reduziert werden.

Das Einbringen der Vertiefungen durch Fräsen bietet den Vorteil, daß die Vertiefungen sowohl am Halbzeug als auch am fertigen Ring eingebracht werden können. Zudem kann durch Fräsen eine exakte Tiefe der Vertiefungen eingehalten bzw. eingestellt werden.

Auch das Einbringen von Prägungen kann sowohl am Halbzeug als auch am fertigen Ring vorgenommen werden.

Vorzugsweise weisen die Vertiefungen eine Tiefe von maximal 0,2 mm auf.

Durch diese geringe Tiefe kann selbst in den mit den Vertiefungen versehenen Teilbereichen die Schwächung des Materials gering gehalten werden. Besonders bevorzugt ist eine Tiefe der eingebrachten Vertiefungen von zwischen 0,1 und 0,2 mm. Hierdurch kann eine ausreichende Rauhigkeit bzw. Griffigkeit für den Kraft- und/oder Formschluß zwischen Ring und Werkstück bzw. Schraube gewährleistet werden und gleichzeitig ein Zusetzen der Vertiefungen mit Schmieröl oder sonstigen Verunreinigungen vermieden werden.

Die Erfindung wird im folgenden im Detail beschrieben.

Federringe sind bei ihrem Einsatz als Schraubensicherung extremen Belastungen ausgesetzt. Beim Anziehen der Schraube wirken hohe Kräfte auf den Ring. Die Federringe müssen daher eine ausreichende Festigkeit aufweisen. Zugleich besteht bei Schraubensicherungen, insbesondere unter Rüttelbelastung, die Gefahr des Lösens der Schraubenverbindung und damit die Notwendigkeit des Nachziehens. Die Federringe sollten somit dem Lösen entgegenwirken können.

Mit dem erfindungsgemäßen Ring kann diesen Erfordernissen ideal Rechnung getragen werden.

Erfindungsgemäß werden an der Ober- und/oder Unterseite des Rings in Teilbereichen Vertiefungen eingebracht.

Das für den erfindungsgemäßen Ring verwendete Material kann insbesondere einen quadratischen, einen trapezförmigen oder einen rechteckigen Querschnitt haben. Es können z.B. rechteckige Materialien mit Abmessungen von 0,9 × 0,5 mm bis 12 × 8 mm zum Einsatz kommen. Nach Kundenwunsch können auch andere Abmessungen Anwendung finden.

Die Ringe können als einfache Federringe mit nur einer Windung, als Federring für den Eisenbahnoberbau (im folgenden als Oberbau-Ring bezeichnet), insbesondere als doppelter oder dreifacher Ring, oder als Federring mit mehreren Windungen ausgebildet sein.

Beim einfachen Ring bietet sich das Vorsehen von Teilbereichen mit Vertiefungen an drei über den Umfang des Rings verteilten Stellen an der Oberseite und versetzt dazu an drei über den Umfang verteilten Stellen an der Unterseite an. Nach dem Anziehen der Schraube ist der einfache Federring in der Regel mit einer solchen Kraft beaufschlagt, daß er über seine gesamte Ober- und Unterseite Kontakt mit dem Werkstück bzw. mit der Schraube hat. Bei einem erfindungsgemäßen Ring, der an jeder Seite drei Teilbereiche, wie oben beschrieben, aufweist, haben somit diese Teilbereiche Kontakt mit der Schraube bzw. dem Werkstück und können einen ausreichenden Kraft- und/oder Formschluß gewährleisten. Gleichzeitig ist das Material in seiner Materialstärke nur gering und nur an wenigen Stellen reduziert, so daß ein Bruch des Rings vermieden werden kann.

Je nach Anwendungsgebiet können aber auch mehr als drei Teilbereiche an der Ober- bzw. Unterseite vorgesehen sein.

Bei Oberbau-Ringen werden die Vertiefungen vorzugsweise an den Enden des Rings und gegebenenfalls zusätzlich an einer oder mehreren Stellen der Ober- bzw. Unterseite, die mit der Schraube bzw. dem Werkstück in Kontakt treten, eingebracht. Hierbei werden vor allem die Bereiche, die besonders kritisch und auch bruchanfällig sind, ausgespart. Die Bruchanfälligkeit ist wohl den in diesen Bereichen herrschenden Spannungen zuzuschreiben ist.

Es liegt auch im Sinne der Erfindung, die Vertiefungen über einen Bereich, der eine vollständige Windung beträgt, auf der Oberseite und auf der Unterseite einzubringen. Hierbei ist aber darauf zu achten, daß sich dieser Bereich an der Oberseite nicht oder nur geringfügig, insbesondere vorzugsweise nur an unkritischen Stellen, mit dem Bereich der Unterseite überlappt. Das Einbringen von Vertiefungen in Bereiche, die durch eine weitere Windung verdeckt sind, d.h. nicht mit der Schraube oder dem Werkstück in Kontakt treten, trägt zur Funktion des Federrings als Schraubensicherung nicht bei, sondern erhöht die Gefahr des Bruchs des Ringes und wird daher bei dem erfindungsgemäßen Ring vorzugsweise vermieden.

Doppelte Oberbau-Ringe sind als Schraubensicherung insbesondere im Bereich von Kurven und in Weichenbereichen besonderen Belastungen ausgesetzt. In diesen Bereichen ist die Rüttelbeanspruchung, die auf die Schraubenverbindung wirkt, gegenüber der normalen Rüttelbeanspruchung auf geraden Schienenstücken erhöht. In diesen Bereichen ist daher beim Einsatz herkömmlicher glatter Federringe ein häufiges Nachziehen notwendig. Beim Einsatz eines erfindungsgemäßen Federrings kann die Häufigkeit des Nachziehens durch die Griffigkeit des Rings, die durch die Vertiefungen erzielt wird, verringert werden.

Die Anzahl der Teilbereiche, in denen Vertiefungen eingebracht sind, bestimmt sich nach der Art des Ringes und nach dessen Einsatzgebiet. Unter gewissen Voraussetzungen, z.B. bei rauhen Werkstücken, kann z.B. das Vorsehen von Teilbereichen ausschließlich auf der Oberseite des Rings ausreichen.

Es sind auch Ringe mit einer Vielzahl von Teilbereichen möglich. Die notwendige Anzahl der Teilbereiche bestimmt sich neben der Art und dem Einsatzgebiet des Rings auch durch die Anzahl der Vertiefungen in den einzelnen Teilbereichen sowie deren Form.

Pro Teilbereich ist mindestens eine Vertiefung vorgesehen; es können aber auch eine Vielzahl von Vertiefungen pro Teilbereich vorliegen.

Die Teilbereiche können auf der Ober- bzw. Unterseite äquidistant oder aber auch in unregelmäßigen Abständen verteilt sein.

Gemäß der Erfindung ist besonders bevorzugt, die Teilbereiche an der Ober- bzw. Unterseite versetzt zueinander anzuordnen. In den Bereichen, in denen die Belastung z.B. durch Biegung gering ist, können aber auch Vertiefungen an sowohl der Ober- als auch der Unterseite vorgesehen sein.

Unabhängig von der Lage der Teilbereiche sollen die Vertiefungen einen Abstand zu den Kanten bzw. Enden der Ober- bzw. Unterfläche haben. Vorzugsweise beträgt dieser Abstand 0,5 bis 2 mm, besonders bevorzugt 1 bis 1,5 mm.

Zusätzlich zu den Vertiefungen oder anstelle der Vertiefungen können auch Erhebungen im Material in den Teilbereichen vorgesehen sein. Die Höhe, die diese Erhebungen über die Oberfläche des Rings aufweist, ist allerdings gering zu halten. Bei einer zu großen Höhe wären die Erhöhungen, insbesondere bei geringer Breite, zu großen Belastungen ausgesetzt und würden gegebenenfalls abbrechen. Vorzugsweise liegen die Erhöhungen mit einer Höhe von 0,1 bis 0,2 mm über der Oberfläche des Rings vor. Die Erhöhungen können z.B. beim Einbringen einer Prägung oder beim Walzen des Materials durch Materialfluß aus den Vertiefungen erzeugt werden.

Als Vertiefungen im Sinne dieser Erfindung sind Punkte, Linien sowie weitere Muster zu verstehen. Die Breite der Vertiefung sollte vorzugsweise im Bereich von 0,1 bis 2 mm, besonders bevorzugt im Bereich von 0,5 bis 1,5 mm liegen. Bei einer zu großen Breite wird der Kraft- und/oder Formschluß nicht mehr ausreichend gewährleistet. Gleiches gilt für zu geringe Breiten der Vertiefung. Das Vorsehen von Punkten oder anderen sich nicht wesentlich längserstreckenden Vertiefungen kann beim Einsatz der Federringe in einer Umgebung, wo diese Verschmutzungen, z.B. durch Öl oder Staub, ausgesetzt sind, zu einer Verringerung der Griffigkeit und somit zu einer Verschlechterung der Sicherungswirkung führen. Längsgestreckte Vertiefungen, insbesondere Linien oder aus Linien gebildete Muster, sind daher bevorzugt.

Die Federringe können z.B. aus Bronze, Messing oder legiertem Stahl, insbesondere Federstahl oder nicht rostendem Stahl hergestellt sein.

Die Erfindung wird im folgenden anhand der beiliegenden Figuren näher erläutert.

Es zeigen:
- Fig. 1:: Seitenansicht herkömmlicher Oberbau-Ringe;
- Fig. 2:: Draufsicht auf verschiedene Ausführungsformen des erfindungsgemäßen Rings sowie auf bearbeitetes Halbzeug;
- Fig. 3:: Verschiedene Ausführungsformen eines erfindungsgemäßen einfachen Federrings in der Drauf- und Untersicht sowie mögliche Muster der Vertiefungen;
- Fig. 4:: Draufsicht auf einfache Federringe gemäß der Erfindung mit Vertiefungen in den Endbereichen; und
- Fig. 5:: Draufsicht und Untersicht auf weitere mögliche Ausführungsformen des erfindungsgemäßen Rings.

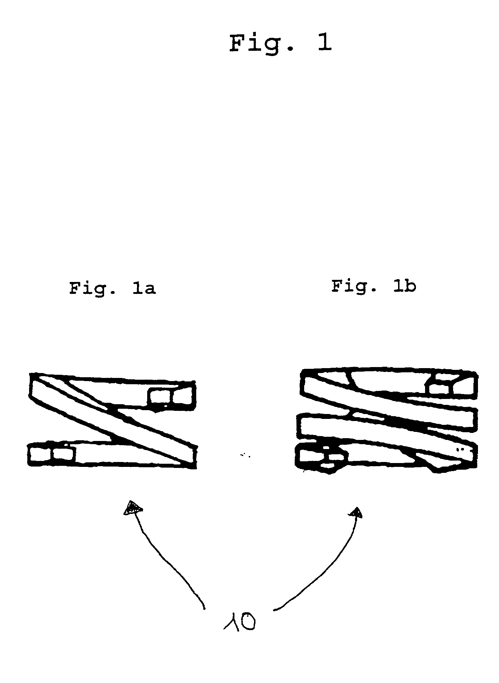

In Figur 1 sind herkömmliche Oberbau-Ringe 10 gezeigt. Fig. 1a stellt einen doppelten Oberbau-Ring 10 und Fig. 1b einen dreifachen Oberbau-Ring 10 dar.

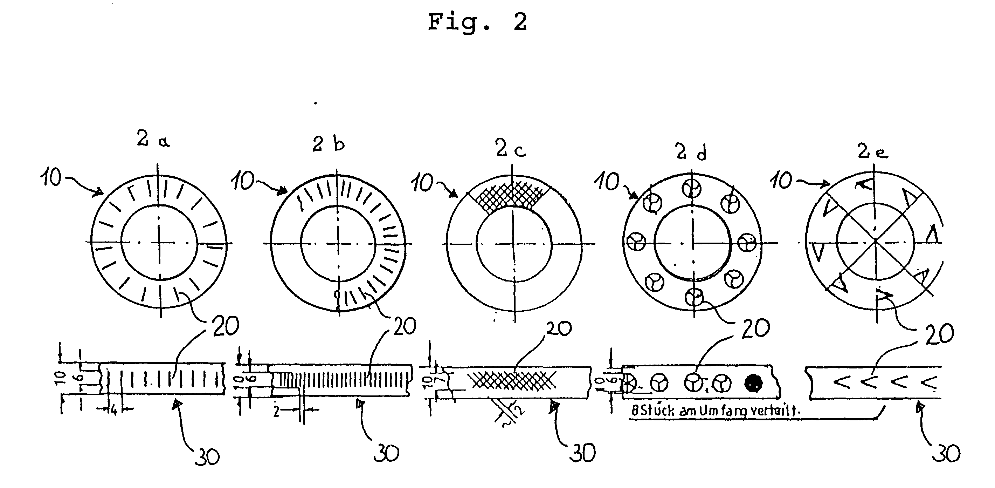

In Figur 2 sind schematisch verschiedene Arten von Mustern für die Vertiefungen 20 gezeigt. Wie sich aus der Darstellung des bearbeiteten Halbzeugs 30, das unter der Draufsicht des Rings 10 gezeigt ist, ergibt, enden die Vertiefungen 20 jeweils in einem Abstand von den Kanten des Rings 10 bzw. des Halbzeugs 30.

In den Ausführungsformen 2a und 2b befindet sich in jedem Teilbereich lediglich eine Vertiefung. Zwischen den Teilbereichen befindet sich ein glatter unprofilierter Bereich von 2 bzw. 4 mm Breite.

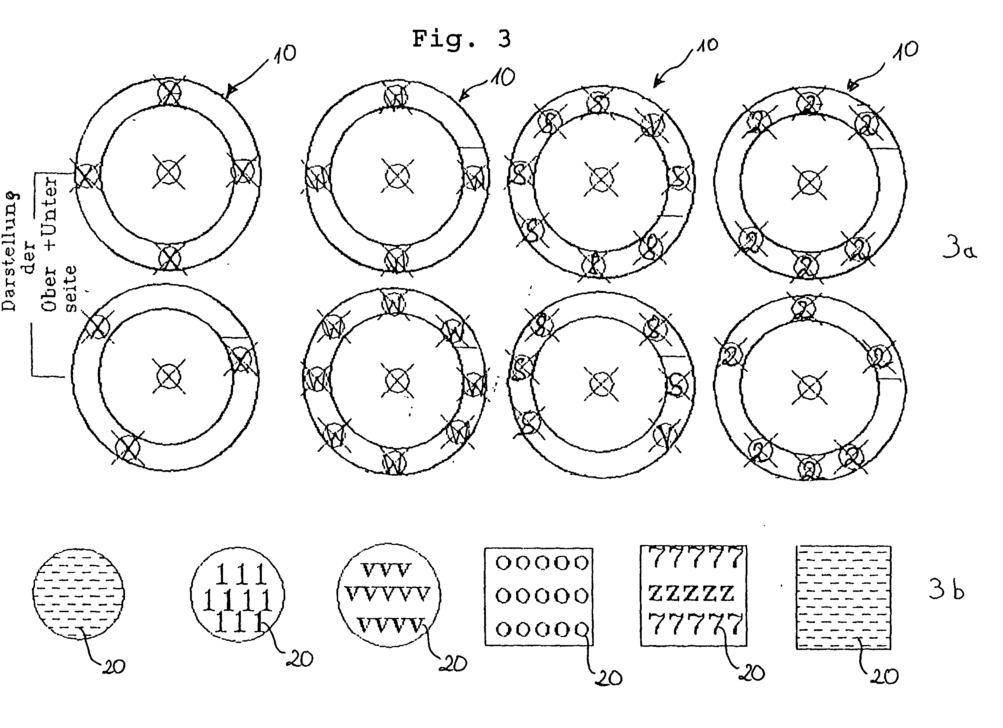

In Figur 3a sind mögliche Anordnungen der Teilbereiche auf der Ober- bzw. Unterseite von erfindungsgemäßen einfachen Federringen 10 gezeigt. Figur 3b gibt mögliche Muster der Vertiefungen 20 und Formen der Teilbereiche an, die auf den in der Figur 3a schematisch dargestellten Teilbereichen eingebracht werden können. Insbesondere bei Verwendung von Zahlen bzw. Buchstaben als Vertiefungen 20 können diese gleichzeitig zur Markierung der Ringe z.B. mit Produktbezeichnungen dienen.

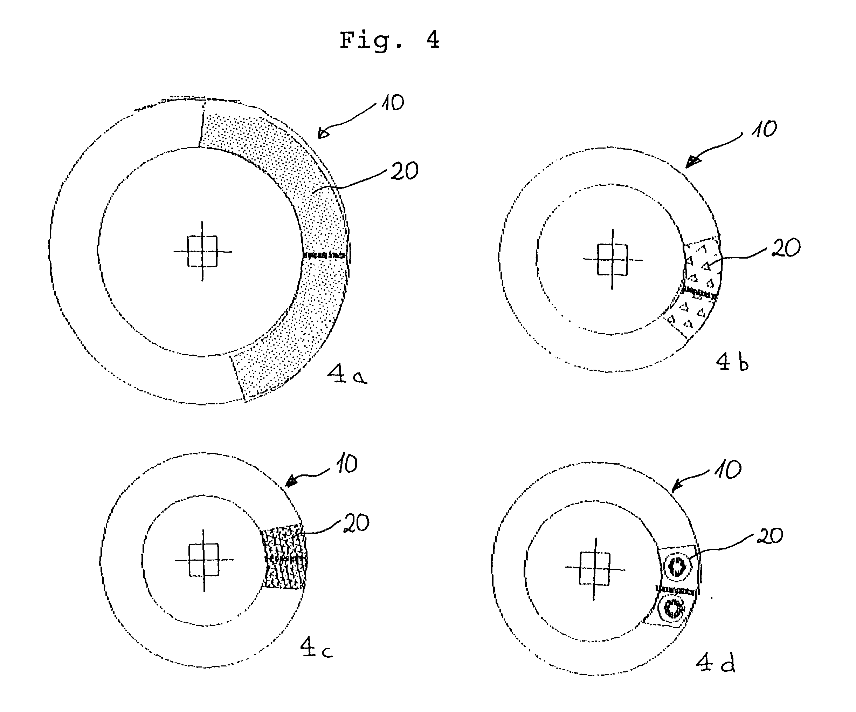

In Figur 4 ist schematisch dargestellt, wie die Vertiefungen 20 im Bereich der Enden der Ober- bzw. Unterseite eines erfindungsgemäßen einfachen Federrings 10 angeordnet sein können.

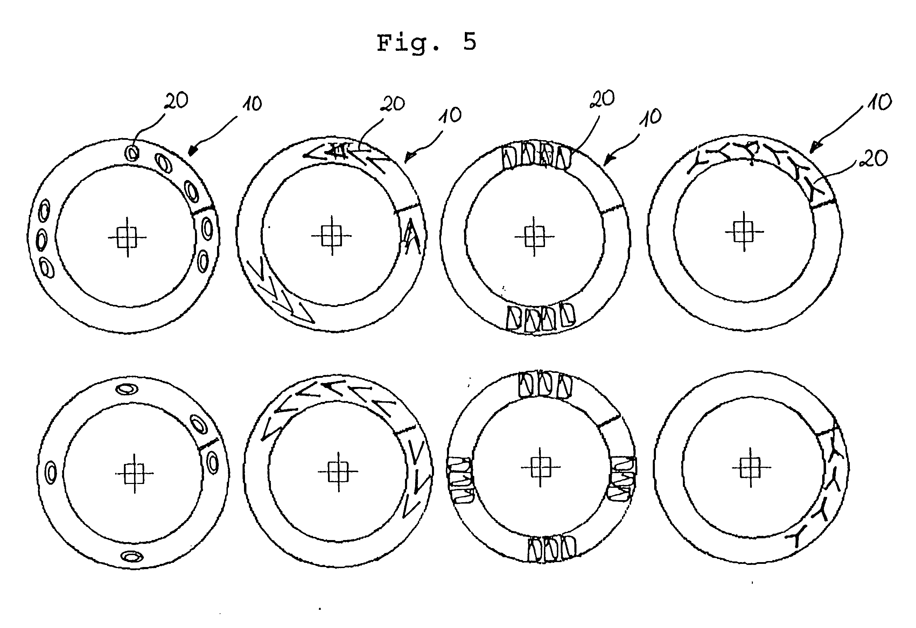

Schließlich zeigt Figur 5 verschiedene Ausführungsformen von mit Vertiefungen 20 versehenen erfindungsgemäßen Federringen 10, wobei in der oberen Reihe die Draufsicht und in der unteren Reihe die Untersicht wiedergegeben ist.

## Patentansprüche

1. Federring, **dadurch gekennzeichnet, daß** dieser an der Ober- und/oder Unterseite lediglich in den Auflagebereichen des Ringes Vertiefungen aufweist, wobei die Vertiefungen nicht bis an Seiten- und End- Kanten des Federrings reichen.

2. Federring nach Anspruch 1, **dadurch gekennzeichnet, daß** die mit Vertiefungen versehenen Teilbereiche an der Ober- und Unterseite des Rings zueinander versetzt angeordnet sind.

3. Federring nach einem der Ansprüche 1 oder 2, **dadurch gekennzeichnet, daß** die mit Vertiefungen versehenen Teilbereiche an den Enden der Ober- bzw. Unterseite des Rings angeordnet sind.

4. Federring nach einem der Ansprüche 1 bis 3, **dadurch gekennzeichnet, daß** die zwischen den mit Vertiefungen versehenen Teilbereiche liegenden Bereiche der Ober- bzw. Unterseite eine glatte, unprofilierte Oberfläche aufweisen.

5. Federring nach einem der Ansprüche 1 bis 4, **dadurch gekennzeichnet, daß** die Vertiefungen Prägungen, Walzeindrücke oder Fräsmuster sind.

6. Federring nach einem der Ansprüche 1 bis 5, **dadurch gekennzeichnet, daß** die Vertiefungen eine Tiefe von maximal 0,2 mm aufweisen.

## Claims

1. A spring lock washer, **characterized in that** it has depressions only in the contact areas of the washer on the top and/or bottom, said depressions not extending as far as the side and end edges of the spring lock washer.

2. A spring lock washer according to claim 1, **characterized in that** the partial areas provided with depressions are mutually offset on the top and bottom of the washer.

3. A spring lock washer according to either of claims 1 to 2, **characterized in that** the partial areas provided with depressions are disposed at the ends of the top or bottom of the washer.

4. A spring lock washer according to any of claims 1 to 3, **characterized in that** the areas of the top or bottom located between the partial areas provided with depressions have a smooth, unprofiled surface.

5. A spring lock washer according to any of claims 1 to 4, **characterized in that** the depressions are embossings, roll impressions or milled patterns.

6. A spring lock washer according to any of claims 1 to 5, **characterized in that** the depressions have a depth of at most 0.2 millimeters.

## Revendications

1. Anneau-ressort, **caractérisé en ce que** cet anneau-ressort comporte dans sa face supérieure et/ou dans sa face inférieure, des renfoncements uniquement dans les zones d'application de l'anneau, les renfoncements ne s'étendant pas jusqu'aux bords latéraux et terminaux de l'anneau-ressort.

2. Anneau-ressort selon la revendication 1, **caractérisé en ce que** les zones partielles pourvues de renfoncements sur la face supérieure et sur la face inférieure de l'anneau sont disposées d'une manière décalée les unes par rapport aux autres.

3. Anneau-ressort selon la revendication 1 ou 2, **caractérisé en ce que** les zones partielles pourvues de renfoncements sont disposées sur les extrémités de la face supérieure ou de la face inférieure de l'anneau.

4. Anneau-ressort selon l'une des revendications 1 à 3, **caractérisé en ce que** les parties, situées entre les zones partielles pourvues de renfoncements, de la face supérieure et de la face inférieure possèdent une surface lisse non profilée.

5. Anneau-ressort selon l'une des revendications 1 à 4, **caractérisé en ce que** les renfoncements sont des gaufrages, des enfoncements laminés ou des motifs fraisés.

6. Anneau-ressort selon l'une des revendications 1 à 5, **caractérisé en ce que** les renfoncements possèdent une profondeur égale au maximum à 0,2 mm.
